(19) Europäisches Patentamt / European Patent Office / Office européen des brevets

(11) **EP 3 241 014 B1**

(12) **FASCICULE DE BREVET EUROPEEN**

(45) Date de publication et mention
de la délivrance du brevet:
**30.08.2023 Bulletin 2023/35**

(21) Numéro de dépôt: **15790611.6**

(22) Date de dépôt: **23.10.2015**

(51) Classification Internationale des Brevets (IPC):
*G01N 15/14* (2006.01)    *G01N 15/10* (2006.01)

(52) Classification Coopérative des Brevets (CPC):
**G01N 15/1434; G01N 15/1463; G03H 1/0443; G03H 1/0866;** G01N 2015/1006; G01N 2015/1452; G03H 2001/005; G03H 2001/0428; G03H 2001/0447; G03H 2001/0469; G03H 2001/0883; G03H 2227/03

(86) Numéro de dépôt international:
**PCT/FR2015/052857**

(87) Numéro de publication internationale:
**WO 2016/107995 (07.07.2016 Gazette 2016/27)**

(54) **SYSTÈME D'ANALYSE D'UN ÉCHANTILLON TRANSPARENT AVEC CONTRÔLE DE POSITION, ET PROCÉDÉ ASSOCIÉ**

SYSTEM ZUR ANALYSE EINER TRANSPARENTEN PROBE MIT POSITIONSSTEUERUNG UND ZUGEHÖRIGES VERFAHREN

SYSTEM FOR ANALYSING A TRANSPARENT SAMPLE WITH CONTROL OF POSITION, AND ASSOCIATED METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.12.2014 FR 1463445**

(43) Date de publication de la demande:
**08.11.2017 Bulletin 2017/45**

(73) Titulaires:
• **Commissariat à l'Énergie Atomique et aux Énergies Alternatives**
**75015 Paris (FR)**
• **Biomérieux**
**69280 Marcy-L'Etoile (FR)**

(72) Inventeurs:
• **PERRAUT, François**
**F-38134 Saint-Joseph de Riviere (FR)**
• **JOLY, Pierre**
**F-38100 Grenoble (FR)**
• **JOSSO, Quentin**
**F-69007 Lyon (FR)**
• **KLOSTER-LANDSBERG, Meike**
**82166 Graefelfing (DE)**

(74) Mandataire: **Brevalex**
**56, Boulevard de l'Embouchure**
**B.P. 27519**
**31075 Toulouse Cedex 2 (FR)**

(56) Documents cités:
DE-A1-102005 036 326    US-A1- 2009 103 082
US-A1- 2013 274 119

• PAVILLON NICOLAS ET AL: "Cell Optical Density and Molecular Composition Revealed by Simultaneous Multimodal Label-Free Imaging", BIOPHYSICAL JOURNAL, vol. 105, no. 5, 3 septembre 2013 (2013-09-03), pages 1123-1132, XP028712247, ISSN: 0006-3495, DOI: 10.1016/J.BPJ.2013.07.031
• YU XIAO ET AL: "Review of digital holographic microscopy for three-dimensional profiling and tracking", OPTICAL ENGINEERING, SOC. OF PHOTO-OPTICAL INSTRUMENTATION ENGINEERS, BELLINGHAM, vol. 53, no. 11, 3 avril 2014 (2014-04-03) , page 112306, XP060048121, ISSN: 0091-3286, DOI: 10.1117/1.OE.53.11.112306 [extrait le 2014-04-03]

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

- **PATRIK LANGEHANENBERG ET AL: "Automated three-dimensional tracking of living cells by digital holographic microscopy", JOURNAL OF BIOMEDICAL OPTICS, vol. 14, no. 1, 19 février 2009 (2009-02-19), page 014018, XP055043026, ISSN: 1083-3668, DOI: 10.1117/1.3080133**

**Description**

## DOMAINE TECHNIQUE

La présente invention concerne de manière générale le domaine de l'analyse optique d'échantillons transparents comportant des points d'intérêt particuliers. Ces points d'intérêt peuvent notamment être des particules biologiques, l'échantillon étant alors un échantillon biologique.

L'invention trouve notamment à s'appliquer au diagnostic microbiologique, plus particulièrement à l'analyse de microorganismes par spectroscopie (notamment par spectroscopie Raman ou par spectroscopie de fluorescence) ou encore par diffraction ou par diffusion.

L'invention concerne plus particulièrement, mais de manière non limitative, l'analyse de particules transparentes à la longueur d'onde d'un faisceau lumineux d'analyse.

## ÉTAT DE LA TECHNIQUE ANTÉRIEURE

L'analyse de particules de faible taille, telles que des particules biologiques, et plus particulièrement des microorganismes, peut être classiquement réalisée au moyen d'une sonde optique, dite voie d'analyse. Cette sonde optique focalise un faisceau lumineux d'analyse sur la particule à analyser, et mesure une caractéristique physique du faisceau après interaction avec la particule, par exemple son spectre de fluorescence ou son spectre Raman. L'analyse d'une particule peut permettre de l'identifier ou de la caractériser. Le faisceau lumineux d'analyse peut être un faisceau laser dont on positionne le col (« waist », en anglais) sur la particule, ou un faisceau focalisé sur la particule. On utilise dans la suite le terme « tache de focalisation » pour désigner le col d'un faisceau laser ou la tache de focalisation d'un faisceau, et on parlera dans les deux cas de la focalisation d'un faisceau d'analyse.

Le positionnement de la tache de focalisation du faisceau d'analyse sur la particule à analyser doit être particulièrement précis, la taille de cette tache de focalisation étant généralement du même ordre que celle de la particule à analyser.

Le positionnement du faisceau d'analyse sur la particule, et plus précisément de sa tache de focalisation, est généralement effectué de manière visuelle sous microscopie. Pour cela, le système comprend en plus de la voie d'analyse déjà décrite, une voie de contrôle de position. La voie de contrôle de position permet de contrôler la position d'un point d'intérêt, notamment une particule, par rapport à la voie d'analyse. Dans une phase préalable à la mesure, la voie d'analyse est réglée de sorte que, lorsqu'une particule se trouve au point de focalisation de la voie d'analyse, son image est nette et à une position repérée sur le capteur de la voie de contrôle.

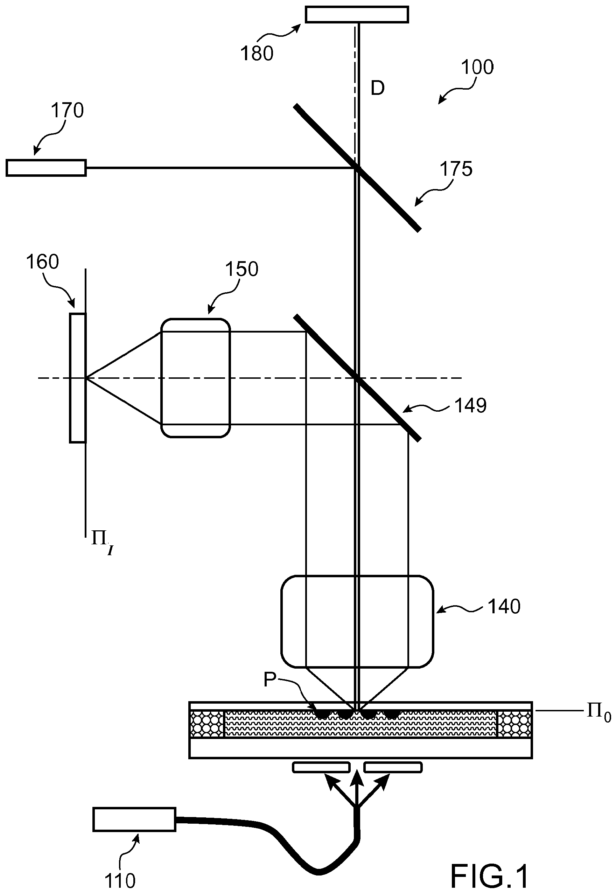

On a illustré en figure 1 un exemple d'un tel système d'analyse 100. Dans cet exemple, le point d'intérêt est une particule.

La voie d'analyse comporte une première source de lumière, par exemple un laser 170, permettant d'illuminer une particule d'intérêt. Le faisceau émis par le laser 170 est nommé faisceau lumineux d'analyse. La voie d'analyse comprend également un premier système optique 140, formé ici par un objectif de microscope. L'axe optique du premier système optique 140 est noté D.

Dans l'exemple représenté, la voie d'analyse comprend également les moyens de mesure 180, pour mesurer une caractéristique physique de ce faisceau après qu'il a interagi avec une particule P.

L'objectif de microscope focalise le col du faisceau laser dans le plan de mise au point $\Pi_0$. Une lame séparatrice 175 (par exemple une lame dichroïque) sépare le faisceau émis par la source laser et le faisceau ayant interagi avec la particule P.

La voie de contrôle de position comprend une source lumineuse 110 d'illumination de la particule P, l'objectif de microscope 140, une lentille de tube 150, et un capteur d'images 160. En sortie de l'objectif 140, l'image de la particule formée par la source lumineuse 110 est renvoyée à l'infini, puis projetée dans le plan du capteur 160 par la lentille de tube 150.

La voie d'analyse et la voie de contrôle de position partagent un même objectif de microscope, et un même plan de mise au point $\Pi_0$, grâce à un miroir de déviation 149. L'une ou l'autre des voies est utilisée alternativement.

La correspondance entre les deux voies est faite lors d'une phase de réglage antérieure à la mesure. Elle consiste par exemple à placer un objet de contrôle du faisceau d'analyse (par exemple une mire structurée opaque) au maximum du point de focalisation, en maximisant le signal obtenu sur les moyens de mesure 180. Ensuite, la position du capteur 160 de la voie de contrôle est réglée de manière à avoir une image nette de l'objet de contrôle, à une position repérée dudit capteur de la voie de contrôle.

Au moment d'une mesure sur une particule d'un échantillon quelconque, le positionnement de ladite particule au point focal du faisceau d'analyse est fait en suivant les deux étapes suivantes.

Dans une première étape, on éteint le laser 170, on allume la source lumineuse 110, on place le miroir de déviation 149, et on acquiert une image du plan de mise au point à l'aide du capteur d'images. Lorsque sur cette image la particule est nette, c'est que cette particule se trouve dans le plan de mise au point. On complète ensuite latéralement le positionnement de la particule sur le point de repère déterminé lors de la phase de réglage de l'instrument décrite plus haut.

Dans une deuxième étape on éteint la source lumineuse 110, on allume le laser 170, et on retire le miroir de déviation 149. Si la particule n'a pas bougé, la tache de focalisation du faisceau d'analyse est située sur celle-ci.

Cependant, le positionnement est rendu délicat voire impossible lorsque la particule est transparente dans le spectre visible. Dans la suite, nous désignerons par particule transparente une particule qui présente une très faible absorption de la lumière visible (c'est-à-dire un coefficient de transmission supérieur ou égal à 70% dans le spectre visible ou plus généralement dans une bande spectrale de 300 nm à 1000 nm) et un faible écart d'indice de réfraction par rapport à son milieu environnant (par exemple un écart d'indice inférieur à 0,1). Certaines cellules (eucaryotes et procaryotes non marquées), certaines particules en matériaux diélectriques peuvent ainsi être qualifiées de transparentes.

Une solution connue consiste à déplacer temporairement la particule P. Le support recevant l'échantillon biologique est alors monté sur une platine de translation selon un axe parallèle à l'axe optique de l'objectif 140.

Ceci consiste à diviser la deuxième étape décrite plus haut en deux sous étapes.

Dans la première sous-étape, on utilise la voie de contrôle de position dans des conditions de défocalisation. En d'autres termes, la particule est décalée le long de l'axe optique de l'objectif de microscope de manière à ce qu'elle ne soit plus dans le plan de netteté de celui-ci. Cette défocalisation permet d'obtenir une image de la particule P non nette, mais sur laquelle la particule transparente peut être distinguée du milieu environnant. On peut ainsi connaître la position latérale de la particule P dans un plan perpendiculaire à l'axe optique de l'objectif.

Dans la deuxième sous-étape, on replace la particule dans le plan de mise au point de l'objectif de microscope. On perd l'image de la particule sur la voie de contrôle de position, mais la tâche de focalisation du faisceau d'analyse est alors sur la particule.

Un inconvénient de cette solution est que si la particule s'est déplacée, a migré ou s'est décrochée de son support (cas par exemple de bactéries capturées par un support) entre la première sous-étape et la mesure, la particule n'est plus au point de focalisation du faisceau d'analyse au moment de la mesure. Il est donc impossible de garantir l'intégrité de l'analyse et encore moins d'effectuer un asservissement dynamique du faisceau d'analyse sur la position de la particule.

L'article intitulé "Cell Optical Density and Molecular Composition Revealed by Simultaneous Multimodal Label-Free Imaging", de Nicolas Pavillon et al., BIOPHYSICAL JOURNAL, vol. 105, no. 5, 3 septembre 2013, pages 1123-1132, ISSN: 0006-3495, DOI: 10.1016/J.BPJ.2013.07.031 et US 2013/274119 A1 montrent des systèmes d'analyse de particules connus.

Le but de la présente invention est par conséquent de permettre d'effectuer un contrôle en temps réel de la position d'une particule, en particulier une particule transparente, notamment pour garantir la fiabilité de son analyse au moyen d'un faisceau lumineux d'analyse.

## EXPOSÉ DE L'INVENTION

La présente invention concerne un système d'analyse d'une particule d'intérêt d'un échantillon biologique selon la revendication 1.

Selon l'invention, le capteur d'images est décalé relativement à l'image du plan de mise au point par le deuxième système optique.

L'image défocalisée obtenue par le capteur d'images permet d'obtenir de vérifier que la particule se trouve bien à une position attendue. Cette vérification peut mettre en oeuvre une simple comparaison avec une image défocalisée, obtenue lorsque la particule se trouve à ladite position de consigne.

L'invention ne nécessite aucune étape intermédiaire de déplacement de l'objectif de microscope ou de l'échantillon.

L'image défocalisée et le pointage de la tache de focalisation peuvent être obtenus simultanément, ou successivement mais dans un intervalle de temps très court. Cela garantit la fiabilité de l'analyse, puisqu'on détecte ainsi un déplacement de la particule avant chaque pointage de la tache de focalisation à l'endroit où doit se trouver cette particule.

En outre, le pointage d'une particule par un faisceau laser d'analyse apporte une énergie qui peut détacher la particule d'un support auquel elle adhère. Grâce au système selon l'invention, on peut vérifier facilement, après positionnement de la tache de focalisation sur la particule, que cela n'a pas provoqué le déplacement de celle-ci.

Selon l'invention, le système d'analyse selon l'invention comprend des moyens de calcul adaptés à calculer par propagation numérique une série d'images reconstruites à partir d'une image fournie par le capteur d'images.

L'image défocalisée obtenue par le capteur d'images permet alors d'obtenir, par calcul, une image associée à une position virtuelle du capteur d'images, autre que sa position réelle. On parle de position virtuelle car en réalité le capteur d'images reste immobile, on ne fait que simuler numériquement son déplacement. On peut alors, comme détaillé dans la suite, positionner la particule d'intérêt de façon précise.

Le système d'analyse peut comprendre des moyens de déviation partielle et/ou sélective, agencés pour réunir la voie de contrôle de position et la voie d'analyse en entrée du système optique partagé.

En variante, la première source lumineuse et la deuxième source lumineuse présentent des longueurs d'onde distinctes, et les moyens de déviation sont sélectifs en longueur d'onde.

Selon l'invention, les moyens de calcul reçoivent en entrée une image fournie par le capteur d'images, et sont adaptés à calculer, à partir de l'image fournie par le capteur d'images et par propagation numérique, une image reconstruite de la particule d'intérêt dans l'image $\Pi_I$ du plan de mise au point $\Pi_O$.

Les moyens de calcul reçoivent en entrée une image fournie par le capteur d'images, et être adaptés à calculer, à partir de l'image fournie par le capteur d'images et par propagation numérique, une série d'images reconstruites en des plans de reconstruction présentant chacun un décalage relativement au plan du capteur d'images.

Les moyens de calcul comprennent des moyens de détermination, à partir de ladite série d'images reconstruites, d'un décalage relativement au plan du capteur d'image, dit décalage optimum, associé à un décalage minimum entre le plan de reconstruction et un plan recevant l'image de la particule d'intérêt par le deuxième système optique.

Les moyens de calcul comprennent des moyens de comparaison entre d'une part le décalage optimum et d'autre part l'écart entre le plan du capteur d'images et l'image du plan de mise au point par le deuxième système optique, le résultat de la comparaison déterminant une valeur de consigne de déplacement axial, et le système d'analyse comprend des moyens de déplacement adaptés à déplacer un support pour recevoir l'échantillon, en réponse à ladite consigne de déplacement axial.

Les moyens de calcul peuvent comprendre des moyens de comparaison entre une image de contrôle et une image reconstruite dite image focalisée, l'image focalisée étant associée à un décalage minimum entre une position d'un plan de reconstruction correspondant, et un plan recevant l'image de la particule d'intérêt par le deuxième système optique.

Le système d'analyse comprend avantageusement des moyens de seuillage d'une image reconstruite, le seuil étant défini par $i_{th} = i_{av} + 3\sigma$ où $i_{av}$ est la valeur moyenne de l'intensité des pixels dans l'image reconstruite et $\sigma$ est l'écart-type de l'intensité des pixels dans l'image reconstruite.

Selon un mode de réalisation avantageux, le résultat de la comparaison entre l'image de contrôle et l'image focalisée détermine une consigne de déplacement transverse, et le système d'analyse comprend des moyens de déplacement adaptés à déplacer un support pour recevoir l'échantillon, en réponse à ladite consigne de déplacement transverse.

L'invention concerne également un procédé d'analyse d'une particule d'intérêt d'un échantillon biologique, mis en oeuvre dans un système l'invention, selon la revendication 7.

De préférence, les étapes d'analyse et de contrôle de position sont mises en œuvre simultanément.

## BRÈVE DESCRIPTION DES DESSINS

D'autres caractéristiques et avantages de l'invention apparaîtront à la lecture de modes réalisation préférentiels de réalisation en référence aux figures jointes parmi lesquelles :

- La Fig. 1 représente de manière schématique un système d'analyse selon l'art antérieur ;
- La Fig. 2 représente de manière schématique un exemple d'un système d'analyse ne faisant pas partie de l'invention ;
- La Fig. 3 représente de manière schématique un mode de réalisation d'un système d'analyse selon l'invention ;
- Les Figs. 4A et 4B représentent de manière schématique une image reconstruite seuillée et une image reconstruite seuillée et traitée, pour localiser une particule ;
- La Fig. 5 représente l'obtention d'une série d'images reconstruites selon l'invention ;
- La Fig. 6 représente, pour une série d'images reconstruites, une courbe donnant l'écart-type dans l'image en fonction d'un décalage associé à cette image ;
- La Fig. 7 représente de manière schématique l'extraction d'une série d'images reconstruites d'une région d'intérêt, à partir d'une série d'images reconstruites d'un échantillon ;
- La Fig. 8 illustre de manière schématique une courbe d'écart-type dans une série d'images reconstruites d'une région d'intérêt, en fonction d'un décalage associé à chaque image ;
- La Fig. 9 représente de manière schématique des étapes mises en oeuvre dans un procédé selon l'invention, pour assurer le bon positionnement de la tache de focalisation du faisceau lumineux d'analyse.

## EXPOSÉ DÉTAILLÉ DE MODES DE RÉALISATION PARTICULIERS

On décrit pour commencer un système d'analyse selon l'invention, ainsi qu'un procédé d'analyse mis en oeuvre dans un tel système.

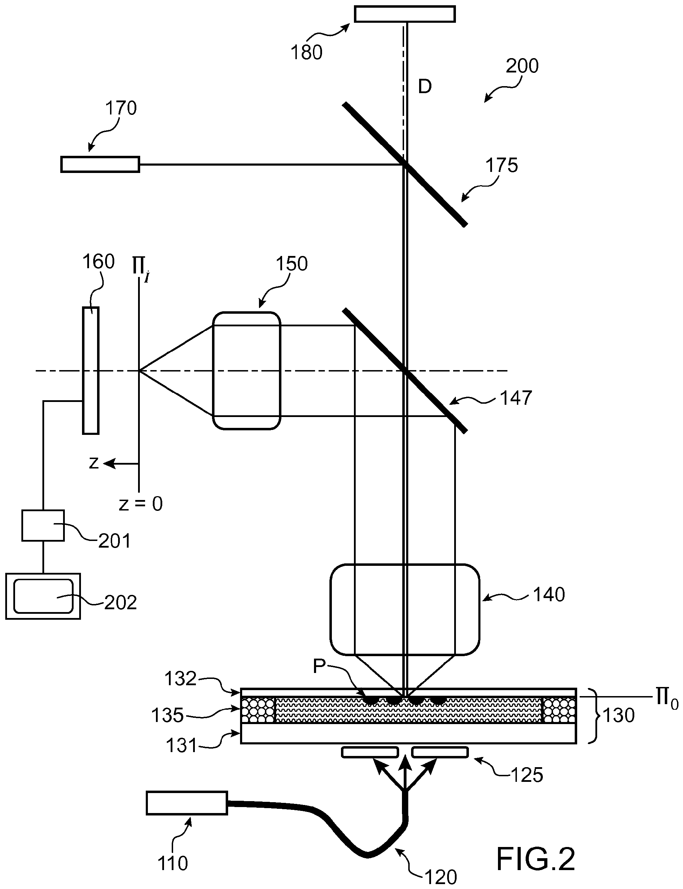

La Fig. 2 représente un exemple d'un système d'analyse ne faisant pas partie de l'invention, pour contrôler visuellement la position d'une particule, en particulier une particule transparente.

Ce système d'analyse, 200, comprend une première voie dite voie d'analyse et une seconde voie dite voie de contrôle de position. Le système 200 ne sera décrit que pour ses différences d'avec le système de la figure 1.

L'échantillon peut se présenter sous la forme d'un milieu liquide tel que de l'eau, une solution tampon, un milieu de culture ou un milieu réactif, dans lequel se trouvent des particules. Les particules sont avantageusement fixées sur un support tel qu'une lame de microscope par exemple.

Alternativement, l'échantillon peut se présenter sous la forme d'un milieu solide tel qu'une gélose dans lequel se trouvent les particules en question. Les particules peuvent se situer à l'intérieur du milieu ou à la surface de l'échantillon.

Alternativement enfin, l'échantillon peut se présenter sous la forme d'un milieu gazeux, les particules se situant dans ce milieu ou de préférence fixées sur un support tel qu'une lame de microscope par exemple.

Les particules à analyser $P$ peuvent être des particules biologiques, des poussières (de polluants par exemple) ou encore des particules de matériaux diélectriques. L'invention est particulièrement avantageuse lorsque ces particules sont transparentes au sens défini plus haut.

Dans le cas d'un échantillon liquide, l'échantillon peut être enfermé dans une chambre d'analyse, 130, délimitée verticalement par une lame inférieure 131, par exemple une lame de microscope conventionnelle, et une lame supérieure 132 (par exemple lamelle de microscope). La chambre d'analyse est délimitée latéralement par un joint étanche 135. Les lames inférieure et supérieure sont transparentes aux longueurs d'onde des première et deuxième sources lumineuses (voir plus loin).

Avantageusement, le système d'analyse selon l'invention comprend un support motorisé (non représenté), pour recevoir l'échantillon comprenant la particule d'intérêt.

Le faisceau d'analyse émis par le laser 170 est réfléchi vers l'échantillon par la première lame séparatrice 175. Le faisceau d'analyse après réflexion sur la lame 175 est aligné selon l'axe optique $D$. Le faisceau d'analyse traverse une seconde lame dichroïque 147 dont l'intérêt est détaillé dans la suite, puis le premier système optique 140, et atteint enfin l'échantillon, et en particulier la particule d'intérêt $P^*$. En amont du premier système optique 140, le faisceau d'analyse est un faisceau laser collimaté.

Le plan de mise au point $\Pi_O$ est le plan orthogonal à l'axe optique D, dans lequel se situe le col du faisceau laser d'analyse formé par le premier système optique 140. Ce plan $\Pi_O$ correspond ici au plan focal objet du premier système optique 140. Dans le mode de réalisation illustré en figure 2, on suppose que les particules, et notamment la particule d'intérêt, se trouvent dans le plan de mise au point $\Pi_O$.

Au moins une partie du faisceau d'analyse ayant interagi avec la particule d'intérêt $P^*$ retourne vers le premier système optique 140. Ce faisceau d'analyse rétrodiffusé traverse à nouveau le premier système optique 140, la deuxième lame séparatrice 147, puis la première lame séparatrice 175, pour être analysé par les moyens de mesure 180.

Ces moyens de mesure 180 effectuent la mesure d'une caractéristique du faisceau d'analyse ayant interagi avec la particule d'intérêt. Ces moyens de mesure 180 peuvent comprendre notamment un spectromètre ou un détecteur d'image, pour réaliser une spectrométrie Raman ou une mesure de fluorescence. Les moyens de mesure peuvent comprendre des moyens de focalisation, non représentés, pour focaliser sur un capteur le faisceau d'analyse ayant interagi avec la particule d'intérêt.

La voie de contrôle de position comprend la deuxième source lumineuse 110, de préférence spatialement cohérente, et éventuellement temporellement cohérente. De préférence, la première source est de faible largeur spectrale, par exemple inférieure à 200 nm voire à 100 nm ou même 25 nm. Cette source lumineuse peut être notamment une diode laser ou une diode électroluminescente. Par mesure de commodité, le faisceau lumineux émis par la source peut être amené au moyen d'une fibre optique 120 sous l'échantillon à analyser (du côté opposé au premier système optique 140). Le cas échéant, le faisceau émis par la fibre est limité au moyen d'un diaphragme, 125. Le faisceau émis par la deuxième source lumineuse est nommé faisceau lumineux de contrôle.

La voie de contrôle de position comprend en outre un deuxième système optique comportant l'objectif de microscope 140, et la lentille 150 dite lentille de tube.

Le deuxième système optique partage avec le premier système optique l'objectif de microscope 140. Le premier système optique et le deuxième système optique sont partiellement confondus. L'objectif de microscope 140 forme un système optique dit partagé, appartenant à la fois à la voie d'analyse et à la voie de contrôle de position. Ce partage est permanent, le miroir de déviation 149 amovible étant remplacé par des moyens de déviation partielle et/ou sélective, ici la seconde lame dichroïque 147 qui met en œuvre une déviation sélective en longueur d'onde.

Le deuxième système optique comprend optionnellement un filtre optique (non représenté) pouvant être situé devant ou derrière l'objectif.

Après diffraction par la particule d'intérêt $P^*$, le faisceau lumineux de contrôle traverse le système optique partagé (objectif de microscope 140), puis est réfléchi par la lame dichroïque 147. Ce faisceau traverse ensuite la lentille de tube 150, avant d'atteindre un capteur d'images 160 par exemple le capteur, CCD ou CMOS, d'une caméra.

La particule d'intérêt $P^*$ est située dans le plan de mise au point $\Pi_O$, ici le plan focal objet de l'objectif de microscope 140. Le faisceau diffracté par la particule d'intérêt P* est donc renvoyé à l'infini par l'objectif de microscope. La lentille de tube 150 permet de focaliser ce faisceau dans un plan $\Pi_I$. Le plan $\Pi_I$ est l'image du plan de mise au point $\Pi_O$ par le deuxième système optique (objectif 140 et lentille 150). Ces deux plans sont conjugués l'un de l'autre par l'objectif et la lentille 150.

Selon l'invention, le capteur d'images 160 n'est pas situé dans ce plan image $\Pi_I$, mais décalé relativement à ce plan. Il s'agit d'un décalage selon l'axe optique du deuxième système optique. Ce décalage est par exemple compris entre +1 $\mu$m et +200 mm, ou -1 $\mu$m et -200 mm, par exemple entre +10 $\mu$m et +5 mm, ou -10 $\mu$m et -5 mm, ou entre +5 $\mu$m et +1000 $\mu$m, ou -5 $\mu$m et -1000 $\mu$m, de préférence entre +10 $\mu$m et +2000 $\mu$m, ou -10 $\mu$m et -2000 $\mu$m.

L'axe optique de la lentille de tube 150 et l'axe optique de l'objectif 140 sont confondus, la lame 147 permettant simplement que cet axe ne s'étende pas en ligne droite. Le capteur est situé dans un plan orthogonal à cet axe optique. Soit Z une coordonnée le long de cet axe optique, l'origine étant située dans le plan $\Pi_I$, Z=z représente l'écart de défocalisation du capteur d'images 160. Les axes X et Y définissent avec Z un repère orthonormal.

Le capteur d'images 160 acquiert une image en transmission de la particule d'intérêt. L'image formée sur le capteur d'images est une image holographique dans la mesure où elle résulte de l'interférence entre une onde diffractée par les particules et une onde de référence ayant traversé l'échantillon sans avoir interagi avec lui.

L'image acquise par le capteur d'images 160 permet de façon indirecte de contrôler la position d'une particule d'intérêt, même s'il s'agit d'une particule transparente. On détaille dans la suite différents exemples de contrôles.

Dans l'exemple représenté en figure 2, la voie de contrôle et la voie d'analyse sont multiplexées en longueur d'onde par la lame dichroïque 147. Les première et deuxième sources lumineuses ont des spectres disjoints. Par exemple, la deuxième source lumineuse est une diode laser GaInN avec un spectre centré autour de 450 nm et la première source lumineuse est un laser YAG doublé émettant à 532 nm. La lame dichroïque 147 réfléchit la lumière à 450 nm vers le capteur d'images 160, et laisse passer celle à 532 nm. (Si les moyens de mesure 180 sont constitués par un spectromètre Raman, la lame séparatrice 175 est choisie pour réfléchir la lumière à 532 nm et laisser passer les longueurs d'onde supérieures.)

Le multiplexage en longueur d'onde présente l'avantage de pouvoir déterminer la position de la particule d'intérêt en temps réel, et simultanément à l'analyse. Cela permet par exemple d'asservir la position du faisceau laser d'analyse sur la particule d'intérêt, avec une constante de temps très faible.

En variante, la voie de contrôle de position et la voie d'analyse sont multiplexées temporellement. Pendant un premier intervalle de temps, on effectue un contrôle de la position de la particule d'intérêt au moyen de la source lumineuse 110, la source lumineuse 170 étant alors éteinte. Dans un second intervalle de temps, la source lumineuse 110 est éteinte et la source lumineuse 170 est allumée, et on réalise l'analyse de la particule.

La lame 147 peut être une lame semi-réfléchissante, adaptée plus particulièrement mais non exclusivement à un multiplexage temporel.

Dans tous les cas, il n'y a pas de déplacement de la particule d'intérêt relativement aux premier et deuxième systèmes optiques, entre le contrôle de position et l'analyse. On peut donc réaliser ces deux étapes simultanément, ou au moins dans un intervalle de temps très court. Cet objectif est atteint alors que les voies de contrôle de position et d'analyse sont fixes l'une relativement à l'autre.

Selon une variante non représentée, le capteur d'images est fixé sur un dispositif de translation selon l'axe optique du deuxième système optique, afin de le positionner à un écart de défocalisation optimum qui dépend des caractéristiques optiques de l'objectif 140 et de la lentille de tube 150.

Selon une autre variante non représentée, la première source lumineuse 170 émet un faisceau non collimaté. Le premier système optique comprend une lentille coopérant avec l'objectif 140 pour positionner la tache de focalisation dans un plan de mise au point $\Pi_O$ qui n'est pas forcément le plan focal objet de l'objectif 140. Dans ce cas, les caractéristiques de la lentille de tube 150 peuvent être adaptées.

Les voies de contrôle et d'analyse pourront être inversées, la lame séparatrice 147 déviant le faisceau lumineux de contrôle de position, et réfléchissant le faisceau lumineux d'analyse ayant interagi avec la particule d'intérêt.

La lentille de tube 150 peut être placée entre le capteur 160 de la voie de contrôle de position et la lame séparatrice 147, comme sur la figure 2, ou entre la lame séparatrice 147 et l'objectif de microscope 140. Dans ce cas, la lentille de tube 150 et l'objectif 140 sont communs au premier et au deuxième système optique, ce qui implique d'adapter le reste du premier système optique.

On suppose ici que l'on dispose d'informations a priori sur la position relative des particules de l'échantillon. Après localisation des particules, on sélectionne parmi elles une particule d'intérêt, *P\**, que l'on souhaite analyser. On suppose dans la suite que la particule d'intérêt a été placée à une position de consigne prise conventionnellement sur l'axe optique et dans le plan de mise au point. La position de la particule d'intérêt peut dériver dans le temps. L'invention permet de déterminer si la position de la particule a évolué et si nécessaire, de ramener la particule d'intérêt à ladite position de consigne. On s'intéresse dans un premier temps à un déplacement de la particule dans le plan XY.

Les moyens de calcul 201 (par exemple un processeur) reçoivent l'image formée sur le capteur d'images 160.

Les moyens de calcul 201 utilisent cette image pour calculer, par propagation numérique, une image reconstruite de l'échantillon et plus particulièrement de la particule d'intérêt, en un plan de reconstruction décalé du plan de la surface de détection du capteur d'image. On parlera dans la suite plus simplement d'un plan de reconstruction associé à un décalage relativement au plan du capteur d'images. En d'autres termes, on simule, par le calcul de ladite image reconstruite, un décalage du capteur relativement à sa position effective.

L'image acquise par le capteur peut être normalisée avant application de l'opérateur de propagation. On peut également lui soustraire sa composante continue.

On trouvera une description d'une méthode de calcul d'image par propagation numérique dans l'article de Sang-Hyuk Lee et al. Intitulé « Holographie microscopy of holgraphically trapped three-dimensional structures » publié dans Optics Express, Vol. 15 ; N° 4, 19 Février 2007, pp. 1505-1512.

Par exemple, si l'on note $h_z(r)$ la fonction de propagation de Rayleigh-Sommerfeld, soit :

$$h_z(r) = -\frac{1}{2\pi}\frac{\partial}{\partial z}\frac{e^{ikR}}{R} \tag{1}$$

où :

z est l'écart entre une position « virtuelle » du capteur d'images et sa position effective, ou en d'autres termes le décalage entre le plan de reconstruction et le plan du capteur d'image,
$r = (x, y)$ est la position dans le plan de l'image fournie par le capteur,

$$R^2 = r^2 + z^2$$

et
$k = 2\pi n/\lambda$ est le nombre d'onde relatif au milieu de propagation.

L'écart z est choisi ici de sorte que le plan de reconstruction soit situé dans le plan $\Pi_l$, ou sensiblement dans ce plan (en fonction par exemple d'un pas minimal de translation du capteur). En tout état de cause, le plan de reconstruction associé à l'image reconstruite est plus proche du plan $\Pi_l$ que le plan du capteur d'images.

L'onde dans le plan de coordonnée z peut être exprimée sous la forme :

$$a(r,z) = |a(r,z)|\exp(i\varphi(r,z)) \tag{2-1}$$

$$a(r,z) = \frac{1}{4\pi^2}\int_{-\infty}^{+\infty} B(q)H_{-z}(q)\exp(iqr)d^2q \tag{2-2}$$

où :

B(q) est la transformée de Fourier de b(r), intensité de l'onde diffractée à la position effective du capteur (l'intensité de l'onde de référence est ici supposée constante), $H_{-z}(q)$ est la transformée de Fourier de $h_{-z}(r)$ et
q est la variable duale de r dans la transformée de Fourier.

On calcule une image reconstruite intermédiaire, dont la valeur de chaque pixel est définie par l'amplitude complexe $a(r,z_n)$. Cette image est une image complexe, chaque pixel étant associé à une valeur complexe avec une partie réelle et une partie imaginaire.

A partir de cette image reconstruite intermédiaire, on calcule l'image reconstruite en vue de la présenter à l'utilisateur. L'image reconstruite est définie à partir de l'amplitude complexe $a(r,z_n)$. Chaque pixel de l'image reconstruite peut être défini par $|a(r,z_n)|^2$, le module au carré de l'amplitude complexe. En variante, chaque pixel peut être défini par

$$\left|\Im\left(a(r,z_n)\right)\right|^2$$

, le carré de la partie imaginaire de l'amplitude complexe.

Sur l'image reconstruite, les particules peuvent être facilement identifiées bien qu'elles soient transparentes. Ce ne serait pas le cas sur une image réelle, obtenue non pas en simulant un positionnement du capteur d'images dans le plan $\Pi_l$ mais en positionnant effectivement le capteur dans ce plan.

L'image reconstruite est fournie à un écran d'affichage 202.

Le processeur 201 peut mettre en oeuvre un seuillage de l'image reconstruite, le seuil étant par exemple défini par :

$$i_{th} = i_{av} + 3\sigma \qquad (3)$$

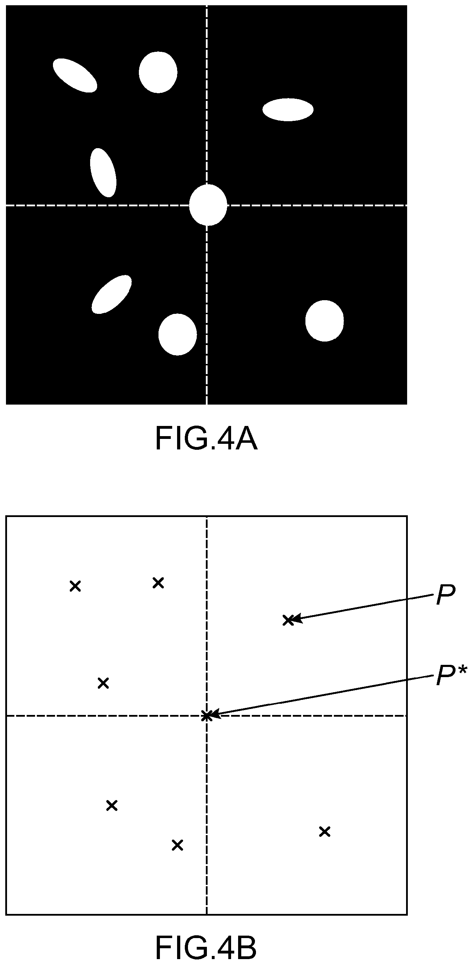

où $i_{av}$ et $\sigma$ sont respectivement la valeur moyenne et l'écart-type de l'intensité dans l'image reconstruite. On obtient l'image telle qu'illustrée en Fig. 4A. La présence d'une particule à une position de consigne peut être vérifiée en comparant l'intensité de l'image reconstruite en ce point par rapport à ladite valeur de seuil.

Le seuillage peut être complété par une détection de contours et des opérations de filtrage morphologiques (ouverture, fermeture). Grâce à ces opérations, les objets ne correspondant pas à des particules sont exclus de l'image. En outre, on peut alors présenter l'image reconstruite sous la forme d'une répartition de points correspondant chacun au centre d'une particule. Cette répartition de points est illustrée en Fig. 4B.

L'affichage d'une image reconstruite ainsi traitée permet à l'utilisateur de vérifier facilement qu'il y a bien une particule à l'endroit attendu. L'absence de particule à proximité de la position de consigne peut provenir du fait que celle-ci s'est décrochée de son support. L'écran d'affichage peut afficher un symbole tel qu'une mire, pour comparer rapidement la position de la particule d'intérêt en X et Y, par rapport à une consigne.

Le contrôle de la position de la particule d'intérêt peut consister, comme ici, en l'affichage de l'image reconstruite associée au plan image $\Pi_I$. En complément ou en variante, ce contrôle comprend la fourniture d'information sur la présence ou non de la particule d'intérêt à la position attendue, et/ou la fourniture d'information sur un déplacement de la particule d'intérêt par rapport à sa position attendue.

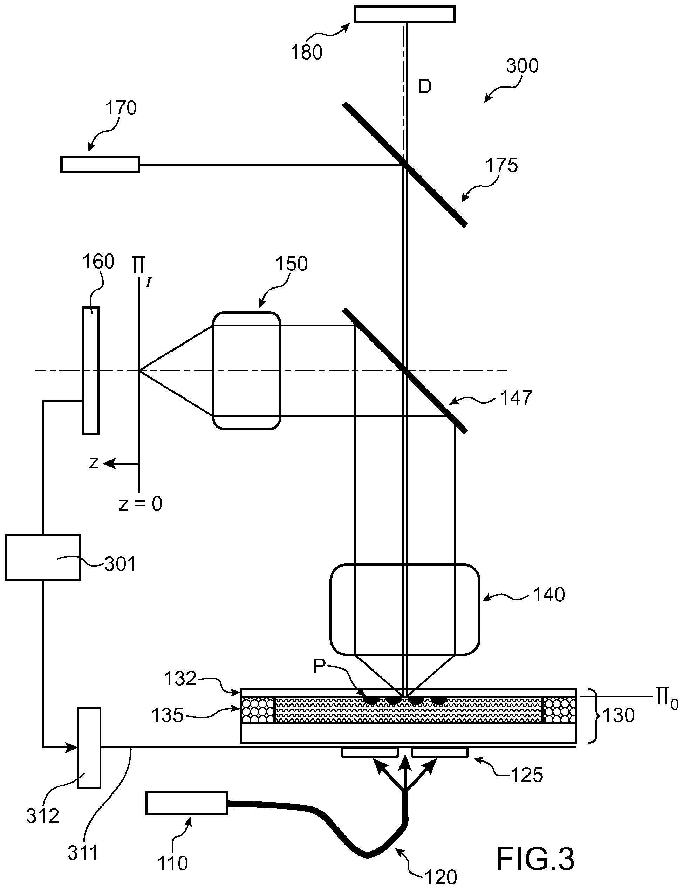

La figure 3 illustre de façon schématique un mode de réalisation de système d'analyse 300 selon l'invention. La figure 3 ne sera décrite que pour ses différences au regard de la figure 2.

Les moyens de calcul 201 et l'écran 202 sont remplacés par des moyens de calcul 301 tels qu'un processeur, et des moyens de déplacement 312 pour déplacer un support 311 recevant l'échantillon.

Les moyens de déplacement 312 consistent par exemple en une platine de translation selon les axes X et Y, et le cas échéant une platine de translation selon l'axe Z.

L'image détectée par le capteur 160 est fournie au processeur 301, formant des moyens de calcul d'une consigne de déplacement. La consigne de déplacement est fournie aux moyens de déplacement 312. La consigne de déplacement est déterminée en fonction d'un déplacement mesuré de la particule d'intérêt relativement à une position de consigne, et est destiné à replacer ladite particule à la position de consigne.

Le processeur 301 met en oeuvre un calcul d'une série d'images reconstruites, associées chacune à un décalage prédéterminé entre une position « virtuelle » du capteur d'images et sa position effective, ou en d'autres termes entre un plan de reconstruction et le plan du capteur d'images. Les plans de reconstruction sont répartis de part et d'autre de la position attendue de l'image, par le deuxième système optique, du plan recevant la particule d'intérêt (ici de part et d'autre du plan image $\Pi_I$). Par exemple, la série de plans de reconstruction balaie un intervalle de +/- 50 $\mu$m autour du plan $\Pi_I$, avec un pas de 2,5 $\mu$m correspondant, si on utilise un grandissement transversal de 100, à un déplacement de l'image du capteur dans l'espace de l'objet de +/- 5 $\mu$m autour du plan $\Pi_0$, avec un pas de 0,25 $\mu$m.

Chaque image reconstruite est calculée à partir de la même image, acquise par le capteur d'images, selon l'algorithme expliqué ci-dessus. Ces images reconstruites sont celles qui seraient observées pour différentes positions $z_1,...,z_N$ du capteur d'images. On obtient une série d'images reconstruites $I_1,...,I_N$.

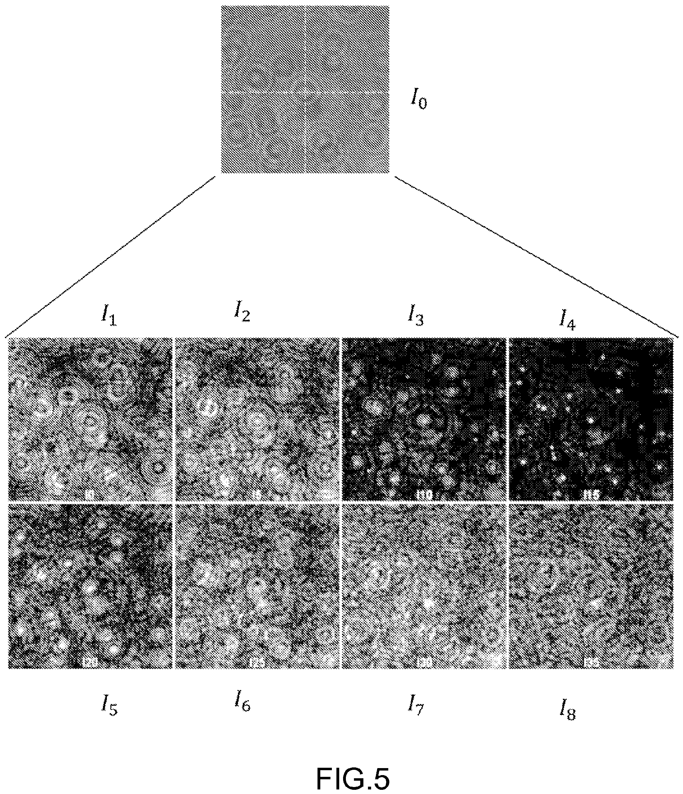

La Fig. 5 représente une série d'images reconstruites $I_1,...,I_N$ obtenue à partir d'une image $I_0$ acquise par le capteur d'images.

Le processeur utilise ces images reconstruites pour déterminer le déplacement de la particule d'intérêt par rapport à sa position de consigne, selon l'axe Z, puis selon les axes X et Y. La position de consigne correspond par exemple au point de focalisation d'un faisceau laser d'analyse.

On décrit d'abord des étapes pour déterminer ledit déplacement de la particule d'intérêt selon Z.

On recherche un point remarquable d'une fonction décrivant l'évolution d'un paramètre des images reconstruites, en fonction de la position du plan de reconstruction selon Z. En variante, la fonction dépend de la position du plan de reconstruction, ramené dans le plan objet du second système optique.

Ce paramètre est avantageusement représentatif du contraste des images reconstruites, par exemple l'écart-type ou la valeur moyenne de gradient dans une zone prédéterminée. Le point remarquable est avantageusement un maximum, mais il peut également s'agir d'un point d'inflexion. Ce point remarquable correspond à un plan de reconstruction situé dans le plan image du plan recevant les particules, et plus particulièrement la particule d'intérêt. Ainsi, on retrouve un déplacement des particules selon Z, en mesurant le déplacement de l'image du plan recevant ces particules.

Le déplacement de la particule d'intérêt selon Z, relativement à la position de consigne, est avantageusement calculé directement dans l'espace objet, en introduisant les paramètres physiques du deuxième système optique, par exemple son grandissement.

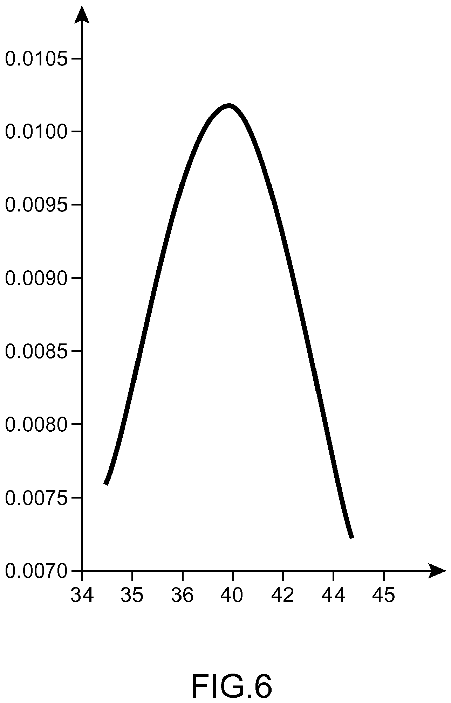

On a représenté en Fig. 6 une courbe donnant l'écart-type dans une image de la série en fonction du décalage, ramené dans l'espace objet, entre le plan du capteur d'images et le plan de reconstruction.

Le plan de la position de consigne est ici le plan $\Pi_I$, correspondant au plan $\Pi_0$ dans l'espace objet du deuxième système optique. Ce plan est situé environ en z'=40 $\mu$m, où z' est un décalage, ramené dans cet espace objet, entre le plan du capteur d'images et le plan de reconstruction.

Les valeurs d'écart-type sont obtenues pour des valeurs discrètes de décalage $z'_n$, et l'on effectue une interpolation entre ces valeurs d'écart-type, par exemple à l'aide d'une fonction spline, pour obtenir une courbe d'écart-type *C(z')* en fonction du décalage z'. On détermine z'*foc* = *argmax(C(z))*, puis on compare à une valeur de consigne de z'*foc* pour calculer un déplacement dans l'espace objet du deuxième système optique.

En variante, on détermine d'abord un déplacement dans l'espace image, puis on calcule le déplacement correspondant dans l'espace objet du deuxième système optique.

La valeur de z'*foc* ne correspond pas forcément à une image effectivement reconstruite. On peut donc se contenter d'un pas d'échantillonnage des plans de reconstruction relativement grossier, ce qui requiert moins de calcul en raison du faible nombre d'images à reconstruire.

En variante, on ne réalise pas d'interpolation, de sorte que la détermination de z'*foc* correspond à la sélection, dans la série d'images reconstruites, de l'image qui approche au mieux les conditions de focalisation. Cette image est celle qui est la plus proche du plan de l'image des particules par le deuxième système optique. Cette image est nommée image focalisée *I*<sub>foc</sub>.

En variante, on réalise une première détermination approchée de la position selon Z à l'aide d'un premier pas d'échantillonnage et d'une première série d'images reconstruites, puis on affine cette détermination à l'aide d'un pas d'échantillonnage plus fin et d'une deuxième série d'images reconstruites centrées sur la position approchée précédemment déterminée.

De préférence, on détermine la position de la particule d'intérêt selon Z à l'aide d'une série d'images reconstruites d'une région d'intérêt centrée sur la particule d'intérêt. En effet, toutes les particules ne sont pas forcément dans un même plan orthogonal à l'axe optique. Pour cela, on peut calculer une première série d'images, sélectionner l'image focalisée *I*<sub>foc</sub>, l'utiliser pour déterminer une position approchée de la particule d'intérêt en X et Y, puis réaliser une détermination précise de la position de la particule d'intérêt en Z à l'aide d'une série d'images reconstruites centrées sur la particule d'intérêt.

La région d'intérêt peut avoir une taille plus grande ou plus faible que celle de la particule à analyser.

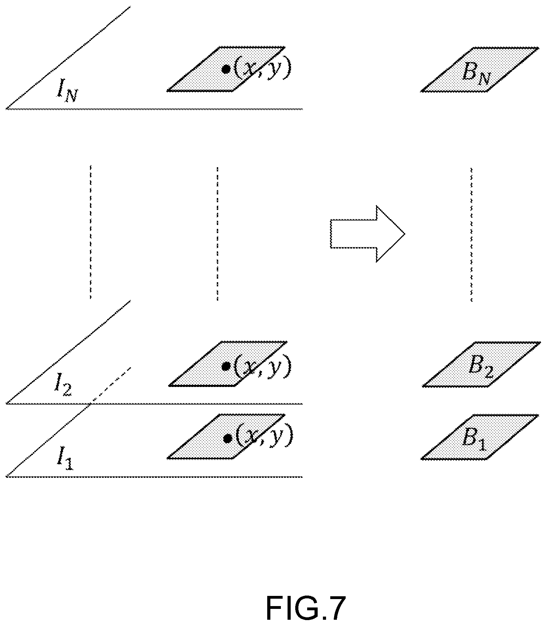

La Fig. 7 représente de manière schématique une série d'images $I_1,...,I_N$ et une série $B_1,...,B_N$ d'images reconstruites de la région d'intérêt, centrées sur une particule d'intérêt P .

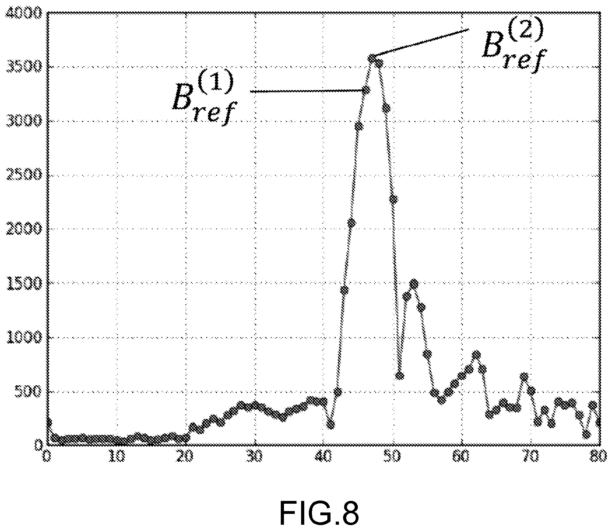

La Fig. 8 donne la courbe donnant l'écart-type dans une série d'images reconstruites de la région d'intérêt, en fonction du rang de l'image de la série. $B_{ref}^{(1)}$ est associé à la région d'intérêt sur l'image focalisée *I*<sub>foc</sub>, l'image focalisée associée à l'échantillon entier. $B_{ref}^{(2)}$ correspond à l'image reconstruite de la région d'intérêt présentant l'écart-type maximum. On comprend que la première sélection $B_{ref}^{(1)}$ qui était optimale sur l'image focalisée ne l'est plus lorsque la mesure de contraste est limitée à la région d'intérêt.

L'homme du métier trouvera de plus amples détails sur cette localisation, dans la demande de brevet FR1460947. Des décalages dans l'espace objet et des décalages dans l'espace image sont reliés par un simple rapport de grandissement.

Une fois le déplacement selon Z calculé, on estime un déplacement de la particule d'intérêt dans le plan XY.

Pour cela, on utilise une image reconstruite associée à un plan de reconstruction à une coordonnée correspondant à la position du plan $\Pi_I$ corrigée du déplacement selon Z précédemment déterminé. Cette image peut être sélectionnée parmi la série d'images précédemment reconstruites, ou reconstruite expressément (par exemple si le déplacement en Z a été déterminé à l'aide d'une interpolation).

Le processeur 301 réalise une comparaison entre cette image reconstruite (éventuellement seuillée et filtrée comme décrit en référence à la figure 2), et une image de contrôle dans laquelle chaque particule est représentée à sa position de consigne. L'image de contrôle forme un plan de la répartition des particules dans l'échantillon. L'image de contrôle peut avoir été déterminée initialement, de la même façon que l'image reconstruite avec laquelle on la compare ensuite.

L'estimation du déplacement peut mettre en oeuvre une technique de recalage d'image, par exemple une corrélation croisée entre l'image de contrôle et l'image reconstruite, ou une minimisation de l'écart quadratique moyen entre ces images, ou une minimisation de l'information mutuelle entre ces images.

On obtient donc *in fine* un déplacement axial selon Z, et un déplacement transverse dans le plan XY. A partir de ce déplacement, le processeur 301 formule une consigne de déplacement qu'il fournit aux moyens de déplacement 312, pour ramener la particule d'intérêt à la position de consigne.

On peut ainsi réaliser un asservissement de la tache de focalisation du faisceau laser d'analyse sur la particule d'intérêt.

L'invention permet de s'affranchir d'une détermination explicite de la position des particules, puisqu'une simple comparaison d'images est utilisée pour déterminer un déplacement transverse de particule.

En variante, on peut déterminer explicitement la position de la particule d'intérêt, pour la comparer à une position de consigne.

De préférence, l'image reconstruite comprend plusieurs particules, dont la particule d'intérêt. On vérifie la position de plusieurs particules autour de la particule d'intérêt. On s'assure ainsi d'observer la bonne particule d'intérêt.

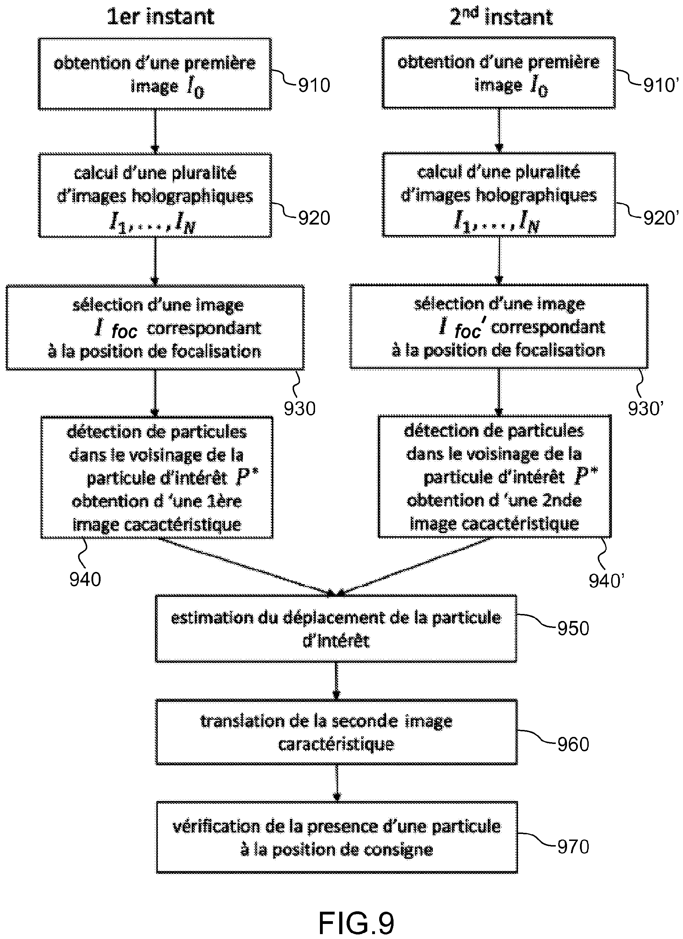

On va maintenant décrire, en référence à la figure 9, des étapes d'un procédé de détermination d'un déplacement des particules entre deux instants, directement à partir des images défocalisées acquises par le capteur d'images. Ce procédé est mis en oeuvre dans un système d'analyse selon l'invention, équipé d'une platine de translation selon les axes X et Y.

A l'étape 910, on acquiert en un premier instant une image initiale $I_0$ de l'échantillon au moyen de la voie de contrôle. On reconstruit ensuite une pluralité d'images reconstruites $I_1,...,I_N$, à partir de l'image $I_0$ (étape 920), et on sélectionne une image focalisée $I_{foc}$ correspondant à la position de l'image du plan recevant la particule d'intérêt, à travers le deuxième système optique (étape 930). On réalise ensuite un seuillage tel que décrit ci-avant de l'image focalisée $I_{foc}$, et on applique le cas échéant des filtres morphologiques (étape 940). A l'issue de l'étape 940, on obtient une première image caractéristique de l'échantillon, centrée sur l'axe optique, comprenant la particule d'intérêt et une pluralité de particules voisines. Cette image est stockée dans une mémoire temporaire.

A un instant ultérieur, on répète les étapes 910 à 940, notées sur la figure 910' à 940', on obtient alors une seconde image caractéristique de l'échantillon.

On estime alors, en 950, le déplacement de la particule d'intérêt entre le premier et le second instants, en comparant les première et seconde images caractéristiques.

La première image caractéristique forme une image de contrôle telle que décrite ci-avant.

L'estimation du déplacement met par exemple en oeuvre un calcul de corrélation croisée, et on pourra générer une alerte si le maximum de la fonction de corrélation est inférieur à une valeur de seuil prédéterminée. En effet, cela peut signifier que la distribution des particules dans l'échantillon, au voisinage de la particule d'intérêt, a été alors fortement perturbée.

A l'étape 960, l'échantillon est translaté selon un vecteur proportionnel au vecteur de déplacement déterminé à l'étape précédente.

On peut vérifier ensuite, à l'aide d'une nouvelle seconde image caractéristique, si le nouveau vecteur de déplacement est bien un vecteur nul (étape 970). Soit on valide le vecteur de déplacement précédemment calculé, soit, un signal d'erreur est généré et l'opérateur est invité à sélectionner une nouvelle particule d'intérêt.

Le vecteur de déplacement ainsi validé permet de contrôler la position de la particule d'intérêt et notamment d'asservir sa position dans le plan XY en commandant la platine de translation.

En d'autres termes, l'invention couvre également une méthode de contrôle de la position d'une particule d'intérêt dans un système d'analyse selon l'invention, telle que :

- en un premier instant, on acquiert une première image de l'échantillon, on déduit de ladite première image, par propagation numérique, une première série d'images reconstruites dudit échantillon, correspondant à différentes valeurs de décalage du plan de reconstruction par rapport au plan image, et l'on sélectionne dans cette première série l'image présentant le plus fort contraste comme première image caractéristique de l'échantillon ;
- en un second instant, on acquiert une seconde image de l'échantillon, on déduit de ladite seconde image, par propagation numérique, une seconde série d'images reconstruites dudit échantillon correspondant à différentes valeurs de décalage du plan de reconstruction par rapport au plan image, et l'on sélectionne dans ladite seconde série l'image présentant le plus fort contraste comme seconde image caractéristique de l'échantillon ;
- on estime le déplacement de la particule d'intérêt entre le premier et le second instant à partir des première et seconde images caractéristiques.

Le système d'analyse selon l'invention comprend alors :

- des moyens de calcul pour calculer par propagation numérique une première (respectivement une seconde) série d'images reconstruites dudit échantillon, correspondant à différentes valeurs de décalage du plan de reconstruction par rapport au plan image, à partir de la première (respectivement de la seconde) image acquise ;

- des moyens pour sélectionner au sein de la première (respectivement de la seconde) série d'images reconstruites l'image présentant le plus fort contraste comme première (respectivement seconde) image caractéristique de l'échantillon ;
- des moyens d'estimation du déplacement de la particule d'intérêt entre les premier et second instants à partir des première et seconde images caractéristiques.

Selon un exemple non représenté et ne faisant pas partie de l'invention, on s'affranchit du calcul d'au moins une image reconstruite.

En effet, on peut repérer un déplacement d'une particule transparente, simplement en comparant l'image défocalisée acquise par le capteur d'images, avec une image de référence. Cette comparaison peut être effectuée par des moyens de calcul. En variante, l'image acquise directement par le capteur d'images est affichée sur un écran, de sorte qu'un utilisateur repère une modification de l'image affichée, lorsque la particule transparente est déplacée. On peut ainsi s'assurer qu'un point d'intérêt de l'échantillon transparent est bien à l'endroit attendu, cet endroit étant notamment le point de focalisation du faisceau d'analyse. Cette vérification est mise en oeuvre de préférence après la période de temps nécessaire à la mesure par le dispositif d'analyse.

Cet exemple permet de s'affranchir des étapes de calcul d'images reconstruites. Une simple comparaison des images défocalisées acquises par le capteur d'image, par exemple avant et après positionnement du faisceau d'analyse sur le point d'intérêt, permet de détecter que celui-ci ne s'est pas déplacée ou n'a pas été endommagé par le faisceau d'analyse. Ceci constitue un test de validité de mesure facile à mettre en oeuvre, en utilisant simplement un détecteur donnant une image défocalisée du plan dans lequel se trouve le point de focalisation du faisceau d'analyse.

L'invention n'est pas limitée aux exemples décrits, et on pourra imaginer de nombreuses variantes sans sortir du cadre de la présente invention.

**Revendications**

1.  Système (300) d'analyse d'une particule d'intérêt d'un échantillon biologique comprenant :

    - une voie d'analyse, comprenant une première source lumineuse (170) émettant un faisceau lumineux d'analyse, un premier système optique (140) agencé pour focaliser le faisceau lumineux d'analyse dans un plan orthogonal à son axe optique (D), dit plan de mise au point ($\Pi_O$), et des moyens de mesure (180) pour mesurer une caractéristique du faisceau lumineux d'analyse ayant interagi avec la particule d'intérêt ;
    - une voie de contrôle de position, comprenant une deuxième source lumineuse (110), un capteur d'images (160), et un deuxième système optique (150, 140) confondu au moins partiellement avec le premier système optique de sorte que le premier système optique et le deuxième système optique comprennent un même système optique (140), dit partagé, le capteur d'images (160) étant décalé relativement à l'image ($\Pi_I$) du plan de mise au point par le deuxième système optique (150, 140), selon l'axe optique dudit deuxième système optique (150, 140) ; et
    - des moyens de calcul (301)

    **caractérisé en ce que** :

    - les moyens de calcul (301) reçoivent en entrée une image fournie par le capteur d'images (160), et sont adaptés à calculer, à partir de l'image fournie par le capteur d'images et par propagation numérique, une série d'images ($I_1$-$I_N$) reconstruites en des plans de reconstruction présentant chacun un décalage relativement au plan du capteur d'images (160) ;
    - les moyens de calcul (301) comprennent des moyens de détermination, à partir de ladite série d'images reconstruites, d'un décalage relativement au plan du capteur d'image, dit décalage optimum,

        ledit décalage optimum étant associé au plan de reconstruction qui présente un décalage minimum avec un plan recevant l'image de la particule d'intérêt par le deuxième système optique,
        ledit plan recevant l'image de la particule d'intérêt étant déterminé parmi la série d'images reconstruites en déterminant un maximum ou un point d'inflexion d'une fonction décrivant l'évolution d'un paramètre des images reconstruites en fonction du décalage du plan de reconstruction, ledit paramètre étant représentatif du contraste des images reconstruites ; et

    - les moyens de calcul (301) comprennent des moyens de comparaison entre d'une part le décalage optimum et d'autre part l'écart entre le plan du capteur d'images et l'image ($\Pi_I$) du plan de mise au point par le deuxième système optique (140, 150), le résultat de la comparaison déterminant une valeur de consigne de déplacement axial ; et
- le système (300) comprend des moyens de déplacement (312) adaptés à déplacer un support (311) pour recevoir l'échantillon, en réponse à ladite consigne de déplacement axial.

2. Système d'analyse (200; 300) selon la revendication 1, **caractérisé en ce qu'**il comprend des moyens de déviation partielle et/ou sélective (147), agencés pour réunir la voie de contrôle de position et la voie d'analyse en entrée du système optique partagé (140).

3. Système d'analyse (200; 300) selon la revendication 2, **caractérisé en ce que** la première source lumineuse (170) et la deuxième source lumineuse (110) présentent des longueurs d'onde distinctes, et **en ce que** les moyens de déviation (147) sont sélectifs en longueur d'onde.

4. Système d'analyse (300) selon l'une quelconque des revendications 1 à 3, **caractérisé en ce que** les moyens de calcul (301) comprennent des moyens de comparaison entre une image de contrôle et une image reconstruite dite image focalisée, l'image focalisée étant associée à un décalage minimum entre une position d'un plan de reconstruction correspondant, et un plan recevant l'image de la particule d'intérêt par le deuxième système optique.

5. Système d'analyse selon l'une quelconque des revendications 1 à 4, **caractérisé en ce qu'**il comprend des moyens de seuillage d'une image reconstruite, le seuil étant défini par $i_{th} = i_{av} + 3\sigma$ où $i_{av}$ est la valeur moyenne de l'intensité des pixels dans l'image reconstruite et $\sigma$ est l'écart-type de l'intensité des pixels dans l'image reconstruite.

6. Système d'analyse (300) selon la revendication 4 ou 5, **caractérisé en ce que** le résultat de la comparaison entre l'image de contrôle et l'image focalisée détermine une consigne de déplacement transverse, et **en ce qu'**il comprend des moyens de déplacement (312) adaptés à déplacer un support (311) pour recevoir l'échantillon, en réponse à ladite consigne de déplacement transverse.

7. Procédé d'analyse d'une particule d'intérêt d'un échantillon biologique, mis en oeuvre dans un système (300) selon l'une quelconque des revendications précédentes, comprenant une étape d'analyse de la particule d'intérêt à l'aide de la voie d'analyse, et une étape de contrôle de position de la particule d'intérêt à l'aide de la voie de contrôle de position, **caractérisé en ce que** la mise en oeuvre de ces deux étapes n'est pas séparée par une étape intercalaire de déplacement de l'échantillon relativement aux voies d'analyse et de contrôle de position, l'étape de contrôle de position comprenant les sous-étapes suivantes :

   - acquisition d'une image de la particule d'intérêt à l'aide du capteur d'images (160) de la voie de contrôle de position ;
   - à partir de cette image, construction par propagation numérique d'au moins une image reconstruite, en un plan de reconstruction présentant un décalage relativement au plan du capteur d'images (160), et calcul d'une série d'images reconstruites en des plans de reconstruction présentant chacun un décalage relativement au plan du capteur d'images ;
   - détermination à partir de ladite série d'images reconstruites, d'un décalage relativement au plan du capteur d'image, dit décalage optimum,

   ledit décalage optimum étant associé au plan de reconstruction qui présente un décalage minimum avec le plan recevant l'image de la particule d'intérêt par le deuxième système optique,
   ledit plan recevant l'image de la particule d'intérêt étant déterminé parmi la série d'images reconstruites en déterminant un maximum ou un point d'inflexion d'une fonction décrivant l'évolution d'un paramètre des images reconstruites en fonction du décalage du plan de reconstruction, ledit paramètre étant représentatif du contraste des images reconstruites ; et

   - comparaison entre d'une part le décalage optimum et d'autre part l'écart entre le plan du capteur d'images et l'image ($\Pi_l$) du plan de mise au point par le deuxième système optique (140, 150), le résultat de la comparaison déterminant une valeur de consigne de déplacement axial.

8. Procédé selon la revendication 7, **caractérisé en ce que** les étapes d'analyse et de contrôle de position sont mises en oeuvre simultanément.

**Patentansprüche**

1. System zur Analyse eines Partikels von Interesse aus einer biologischen Probe, Folgendes umfassend:

   - einen Analysepfad, umfassend eine erste Lichtquelle (170), die einen Analyselichtstrahl aussendet, ein erstes optisches System (140), das so beschaffen ist, dass es den Analyselichtstrahl in einer Ebene senkrecht zu seiner optischen Achse (D), der sogenannten Fokussierungsebene ($\Pi_0$), fokussiert, und Messmittel (180), um eine Eigenschaft des Analyselichtstrahls zu messen, der mit dem Partikel von Interesse interagiert hat;
   - einen Positionskontrollpfad, umfassend eine zweite Lichtquelle (110), einen Bildsensor (160) und ein zweites optisches System (150, 140), das zumindest teilweise mit dem ersten optischen System zusammenfällt, so dass das erste optische System und das zweite optische System ein gleiches optisches System (140) umfassen, das als geteilt bezeichnet wird, wobei der Bildsensor (160) relativ zu dem S0 Bild ($\Pi_I$) der Fokussierungsebene durch das zweite optische System (150, 140) gemäß der optischen Achse des zweiten optischen Systems (150, 140) versetzt ist; und
   - Rechenmittel (301),

   **dadurch gekennzeichnet, dass**:

   - die Rechenmittel (301) am Eingang ein von dem Bildsensor (160) bereitgestelltes Bild empfangen und dazu geeignet sind, aus dem von dem Bildsensor bereitgestellten Bild und durch digitale Vermehrung eine Reihe von Bildern ($I_1$-$I_N$) zu berechnen, die in Rekonstruktionsebenen rekonstruiert werden, die jeweils einen Versatz relativ zur Ebene des Bildsensors (160) aufweisen;
   - die Rechenmittel (301) Mittel zur Bestimmung eines Versatzes relativ zur Ebene des Bildsensors anhand der rekonstruierten Bildserie umfassen, der als optimaler Versatz bezeichnet wird,

     wobei der optimale Versatz der Rekonstruktionsebene zugeordnet ist, die einen minimale Versatz zu der Ebene aufweist, die das Bild des Partikels von Interesse durch das zweite optische System empfängt, wobei die Ebene, die das Bild des Partikels von Interesse empfängt, aus der Reihe der rekonstruierten Bilder bestimmt wird, indem ein Maximum oder ein Wendepunkt einer Funktion bestimmt wird, die die Entwicklung eines Parameters der rekonstruierten Bilder als Funktion des Versatzes der Rekonstruktionsebene beschreibt, wobei der Parameter repräsentativ für den Kontrast der rekonstruierten Bilder ist; und

   - die Rechenmittel (301) Mittel zum Vergleich zwischen einerseits dem optimalen Versatz und andererseits der Abweichung zwischen der Ebene des Bildsensors und dem Bild ($\Pi_I$) der Fokussierungsebene durch das zweite optische System (140, 150) umfassen, wobei das Ergebnis des Vergleichs einen Sollwert für die axiale Verschiebung bestimmt; und
   - das System (300) Verschiebungsmittel (312) umfasst, die geeignet sind, um einen Träger (311) zur Aufnahme der Probe in Reaktion auf den Sollwert der axialen Verschiebung zu bewegen.

2. Analysesystem (200; 300) nach Anspruch 1, **dadurch gekennzeichnet, dass** es Mittel zur teilweisen und/oder selektiven Ablenkung (147) umfasst, die so angeordnet sind, dass sie den Positionskontrollpfad und den Analysepfad am Eingang des gemeinsam genutzten optischen Systems (140) zusammenführen.

3. Analysesystem (200; 300) nach Anspruch 2, **dadurch gekennzeichnet, dass** die erste Lichtquelle (170) und die zweite Lichtquelle (110) unterschiedliche Wellenlängen aufweisen, und dadurch, dass die Ablenkmittel (147) wellenlängenselektiv sind.

4. Analysesystem (300) nach einem der Ansprüche 1 bis 3, **dadurch gekennzeichnet, dass** die Rechenmittel (301) Mittel zum Vergleich zwischen einem Kontrollbild und einem rekonstruierten Bild, das fokussiertes Bild genannt wird, umfassen, wobei das fokussierte Bild mit einer minimalen Verschiebung zwischen einer Position einer entsprechenden Rekonstruktionsebene und einer Ebene, die das Bild des Partikels von Interesse durch das zweite optische System empfängt, assoziiert ist.

5. Analysesystem nach einem der Ansprüche 1 bis 4, **dadurch gekennzeichnet, dass** es Mittel zur Schwellenwertbildung eines rekonstruierten Bildes umfasst, wobei der Schwellenwert definiert ist durch $i_{th} = i_{av} + 3\sigma$, wobei $i_{av}$ der Mittelwert der Pixelintensität in dem rekonstruierten Bild und $\sigma$ die Standardabweichung der Pixelintensität in dem rekonstruierten Bild ist.

**6.** Analysesystem (300) nach Anspruch 4 oder 5, **dadurch gekennzeichnet, dass** das Ergebnis des Vergleichs zwischen dem Kontrollbild und dem fokussierten Bild einen Sollwert für die Querverschiebung bestimmt, und dadurch, dass es Verschiebemittel (312) umfasst, die dazu ausgelegt sind, einen Träger (311) zum Aufnehmen der Probe in Reaktion auf den Sollwert für die Querverschiebung zu verschieben.

**7.** Verfahren zum Analysieren eines Partikels von Interesse aus einer biologischen Probe, das in einem System (300) nach einem der vorhergehenden Ansprüche durchgeführt wird, umfassend einen Schritt der Analyse des Partikels von Interesse unter Verwendung des Analysepfads und einen Schritt der Kontrolle der Position des Partikels von Interesse unter Verwendung des Positionskontrollpfads, **dadurch gekennzeichnet, dass** die Durchführung dieser beiden Schritte nicht durch einen Zwischenschritt der Verschiebung der Probe relativ zu dem Analyse- und dem Positionskontrollpfad getrennt ist, wobei der Positionskontrollschritt die folgenden Teilschritte umfasst:

- Erfassen eines Bildes des Partikels von Interesse mithilfe des Bildsensors (160) des Positionskontrollpfads;
- ausgehend von diesem Bild, Konstruktion durch digitale Vermehrung mindestens eines rekonstruierten Bildes in einer Rekonstruktionsebene, die einen Versatz relativ zur Ebene des Bildsensors (160) aufweist, und Berechnung einer Reihe von rekonstruierten Bildern in Rekonstruktionsebenen, die jeweils einen Versatz relativ zur Ebene des Bildsensors aufweisen;
- Bestimmen eines Versatzes aus der Reihe rekonstruierter Bilder relativ zur Ebene des Bildsensors, der als optimaler Versatz bezeichnet wird,

wobei der optimale Versatz der Rekonstruktionsebene zugeordnet ist, die einen minimalen Versatz zu der Ebene aufweist, die das Bild des Partikels von Interesse durch das zweite optische System empfängt, wobei die Ebene, die das Bild des Partikels von Interesse empfängt, aus der Reihe der rekonstruierten Bilder bestimmt wird, indem ein Maximum oder ein Wendepunkt einer Funktion bestimmt wird, die die Entwicklung eines Parameters der rekonstruierten Bilder in Abhängigkeit von der Verschiebung der Rekonstruktionsebene beschreibt, wobei der Parameter für den Kontrast der rekonstruierten Bilder repräsentativ ist; und

- Vergleich zwischen einerseits dem optimalen Versatz und andererseits der Abweichung zwischen der Ebene des Bildsensors und dem Bild ($\Pi_I$) der Fokussierungsebene durch das zweiter optischer System (140, 150), wobei das Ergebnis des Vergleichs einen Sollwert für die axiale Verschiebung bestimmt.

**8.** Verfahren nach Anspruch 7, **dadurch gekennzeichnet, dass** die Schritte der Analyse und der Positionskontrolle gleichzeitig durchgeführt werden.

## Claims

**1.** A system for analysing a particle of interest of a biological sample comprising:

- an analysis channel, comprising a first light source (170) emitting an analysis light beam, a first optical system (140) arranged to focus the analysis light beam in a plane orthogonal to the optical axis (D) thereof, called focus plane ($\Pi_0$). and measurement means (180) for measuring a characteristic of the analysis light beam having interacted with the particle of interest;
- a position control channel, comprising a second light source (110), an image sensor (160), and a second optical system (150, 140) at least partially merged with the first optical system such that the first optical system and the second optical system comprise the same optical system (140), called shared optical system, the image sensor (160) being offset relative to the image ($\Pi_I$) from the focus plane by the second optical system (150, 140), along the optical axis of said second optical system (150, 140); and
- calculation means

**characterised in that**

- the calculation means (301) receive, as input, an image provided by the image sensor (160), and are adapted to calculate, from the image provided by the image sensor and by digital propagation, a series of images ($I_1$ - $I_N$) reconstructed into reconstruction planes each having an offset relative to the plane of the image sensor (160);
- the calculation means (301) comprise means for determining, from said series of reconstructed images, an offset relative to the plane of the image sensor, called optimum offset,

said optimum offset being associated with the reconstruction plane which has a minimum offset with a plane receiving the image of the particle of interest by the second optical system,

said plane receiving the image of the particle of interest being determined from the series of reconstructed images by determining a maximum or an inflection point of a function describing the evolution of a parameter of the reconstructed images depending on the offset of the reconstruction plane, said parameter being representative of the contrast of the reconstructed images; and

- the calculation means (301) comprise means of comparison between, on the one hand, the optimum offset and, on the other hand, the distance between the plane of the image sensor and the image ($\Pi_l$) of the focus plane by the second optical system (140, 150), the result of the comparison determining an axial displacement setpoint value; and
- the system (300) comprises displacement means (312) adapted to displace a support (311) to receive the sample, in response to said axial displacement setpoint.

2. The analysis system (200; 300) according to claim 1, **characterised in that** it comprises partial and/or selective deflection means (147), arranged to combine the position control channel and the analysis channel at the input of the shared optical system (140).

3. The analysis system (200; 300) according to claim 2, **characterised in that** the first light source (170) and the second light source (110) have distinct wavelengths, and **in that** the deflection means (147) are wavelength selective.

4. The analysis system (300) according to any one of claims 1 to 3, **characterised in that** the calculation means (301) comprise means of comparison between a control image and a reconstructed image called focused image, the focused image being associated with a minimum offset between a position of a corresponding reconstruction plane, and a plane receiving the image of the particle of interest by the second optical system.

5. The analysis system according to any one of claims 1 to 4, **characterised in that** it comprises means for thresholding a reconstructed image, the threshold being defined by $i_{th} = i_{av} + 3\sigma$ where $i_{av}$, is the average value of the intensity of the pixels in the reconstructed image and $\sigma$ is the standard deviation of the intensity of the pixels in the reconstructed image.

6. The analysis system (300) according to claim 4 or 5, **characterised in that** the result of the comparison between the control image and the focused image determines a transverse displacement setpoint, and **in that** it comprises displacement means (312) adapted to displace a support (311) for receiving the sample, in response to said transverse displacement setpoint.

7. A method for analysing a particle of interest in a biological sample, implemented in a system (300) according to any of the preceding claims, comprising a step of analysing the particle of interest using the analysis channel, and a step for controlling the position of the particle of interest using the position control channel, **characterised in that** the implementation of these two steps is not separated by an intermediate step of displacing the sample relative to the analysis and position control channels, the step for controlling the position comprising the following sub-steps:

- acquisition of an image of the particle of interest using the image sensor (160) of the position control channel;
- from this image, construction by digital propagation of at least one reconstructed image, in a reconstruction plan having an offset relative to the plane of the image sensor (160), and calculation of a series of reconstructed images in reconstruction plans each having an offset relative to the plane of the image sensor;
- determination, from the said series of reconstructed images, of an offset relative to the plane of the image sensor, called optimum offset,

said optimum offset being associated with the reconstruction plan which has a minimum offset with the plan receiving the image of the particle of interest by the second optical system,

said plane receiving the image of the particle of interest being determined from the series of reconstructed images by determining a maximum or an inflection point of a function describing the evolution of a parameter of the reconstructed images depending on the offset of the reconstruction plane, said parameter being representative of the contrast of the reconstructed images; and

- comparison between, on the one hand, the optimum offset and, on the other hand, the distance between the plan of the image sensor and the image ($\Pi_l$) of the focus plan by the second optical system (140, 150), the result of comparison determining an axial displacement setpoint value.

8. The method according to claim 7, **characterised in that** the analysis and position control steps are implemented simultaneously.

FIG.1

FIG.2

FIG.3

FIG.4A

FIG.4B

$I_0$

$I_1$     $I_2$     $I_3$     $I_4$

$I_5$     $I_6$     $I_7$     $I_8$

FIG.5

FIG.6

FIG.7

FIG.8

1er instant

2nd instant

obtention d'une première image $I_0$ — 910

obtention d'une première image $I_0$ — 910'

calcul d'une pluralité d'images holographiques $I_1, \ldots, I_N$ — 920

calcul d'une pluralité d'images holographiques $I_1, \ldots, I_N$ — 920'

sélection d'une image $I_{foc}$ correspondant à la position de focalisation — 930

sélection d'une image $I_{foc}'$ correspondant à la position de focalisation — 930'

détection de particules dans le voisinage de la particule d'intérêt $P^*$ obtention d'une 1ère image cacactéristique — 940

détection de particules dans le voisinage de la particule d'intérêt $P^*$ obtention d'une 2nde image cacactéristique — 940'

estimation du déplacement de la particule d'intérêt — 950

translation de la seconde image caractéristique — 960

vérification de la presence d'une particule à la position de consigne — 970

FIG.9

26

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2013274119 A1

- FR 1460947

**Littérature non-brevet citée dans la description**

- **NICOLAS PAVILLON et al.** Cell Optical Density and Molecular Composition Revealed by Simultaneous Multimodal Label-Free Imaging. *BIOPHYSICAL JOURNAL,* 03 Septembre 2013, vol. 105 (5), ISSN 0006-3495, 1123-1132

- **SANG-HYUK LEE et al.** Holographie microscopy of holgraphically trapped three-dimensional structures. *Optics Express,* 19 Février 2007, vol. 15 (4), 1505-1512